# DEMANDE DE BREVET EUROPEEN

(11) **EP 0 655 199 A2**
(43) Date de publication de la demande: **31.05.1995**
(21) Numéro de dépôt: 94500198.0
(22) Date de dépôt: 25.11.1994
(51) Int. Cl.: A21B 1/26

(54) **Four perfectionné**

(30) Priorité: 26.11.1993 ES 9302499
(71) Demandeur: Sanchez Sanchez, Francisca, E-08912 Badalona (Barcelona) (ES)
(72) Inventeur: Gomez Sanchez, José, E-08912 Badalona (Barcelona) (ES)
(74) Mandataire: Urizar Anasagasti, Jesus Maria

(57) **Abrégé**

Four perfectionné, qui intègre une chambre chauffée et un compartiment annexe où sont localisés des moyens de chauffage et des moyens d'impulsion du fluide chaud vers la chambre chauffée par l'intérieur d'un conduit fixe. A l'intérieur de la chambre chauffée est disposé au moins un pont creux, sur lequel agit un élément moteur qui l'oblige à réaliser des déplacements alternatifs sur des moyens de guidage; ce pont creux définit dans les flancs intérieurs un nombre réduit de sorties verticales équidistantes, et par le flanc extérieur le bout du conduit s'emboîte de manière coulissante le bout du conduit de circulation d'air chaud. A l'intérieur du four on peut disposer des moyens d'entraînement de chariots porte-plateaux pour les positionner à l'intérieur du pont.

Ce four s'applique pour cuire des produits, de préférence alimentaires.

## Description

Le présent mémoire descriptif concerne, comme son titre l'indique, un four perfectionné du type de ceux employés pour cuire des produits, de préférence alimentaires et qui intègre des moyens de chauffage et des turbines qui projettent l'air chaud vers l'intérieur du four.

Les fours qui sont connus actuellement intègrent une turbine qui pousse l'air chaud par des moyens de chauffage et le lance vers la zone intérieure du four à travers une pluralité d'orifices ou de rainures aménagées dans les cloisons de celui-ci, de sorte que l'on obtient le chauffage de cette zone intérieure du four où se trouve un chariot porte-plateaux qui sert de support au produit à cuire.

Ce type de four, afin d'obtenir une distribution uniforme de chaleur à l'intérieur de la chambre chauffée, dans les flancs qui la délimitent présentent un nombre très élevé d'orifices pour la sortie de l'air chaud, car autrement la chaleur tomberait sur des points déterminés du produit, de sorte que la cuisson de celui-ci ne serait pas uniforme; de plus, ce nombre élevé de sorties est disposé aussi bien dans des fours rotatifs, dans lesquels le chariot tourne sur un axe central, que dans des fours statiques dans lesquels le chariot porte-plateaux ne se déplace pas durant le processus de cuisson du produit.

Le problème que présentent ce type de fours est le grand nombre de sorties disposées dans les flancs de la chambre chauffée, qui font sa fabrication plus difficile et, par conséquent, augmentent le coût; d'autre part, la capacité de ceux-ci est limitée puisque dans son intérieur on ne peut loger qu'un chariot porte-plateaux.

Pour résoudre ces problèmes, on a conçu le four perfectionné objet de la présente invention qui présente la particularité de présenter à l'intérieur de la chambre chauffée un pont creux, avec un nombre réduit d'orifices disposés verticalement sur les flancs intérieurs de celui-ci, ce pont creux étant monté sur des guides parallèles sur lesquelles il peut se déplacer longitudinalement pour décrire des mouvements alternatifs avec une course de longueur égale à celle existant entre deux orifices consécutifs de sortie d'air chaud.

Ce pont creux définit intérieurement des dimensions qui permettent le positionnement dans son intérieur d'au moins un chariot porte-plateaux avec le produit à cuire.

Le pont creux présente un orifice d'entrée d'air chaud sur lequel s'accouple un conduit à l'intérieur duquel circule le fluide chaud recueilli des moyens de chauffage et projeté par une turbine; l'accouplement entre le pont creux et le conduit de circulation de fluide chaud est coulissant, de sorte que le pont peut se déplacer en décrivant les mouvements alternatifs précédemment mentionnés, en maintenant l'accouplement avec le conduit fixe de circulation d'air chaud.

Il est prévu que les déplacements alternatifs du pont sur les guides se réalise au moyen d'un mécanisme transmetteur de mouvement actionné par un élément moteur, ce qui permet que lorsque le pont décrit ces mouvements alternatifs, les sorties se déplacent depuis une position originale jusqu'à obtenir la position occupée précédemment par la sortie consécutive dans la direction de marche, le fluide chaud réalisant des balayages successifs sur le produit, obtenant une cuisson uniforme de celui-ci avec un nombre réduit de sorties.

De plus, ce four présente l'avantage que l'on peut augmenter sa longueur totale autant qu'on veut, en incorporant à l'intérieur de la chambre chauffée plusieurs ponts creux, avec leurs moyens de chauffage correspondants, turbines et mécanismes transmetteurs de mouvement, tous les ponts se déplaçant simultanément pour former un tunnel de cuisson à l'intérieur duquel on peut disposer alignés plusieurs chariots porte-plateaux avec le produit à cuire.

Dans le cas de formation d'un tunnel de cuisson, il est prévu de disposer à l'intérieur de la chambre chauffée des moyens d'entraînement des chariots pour faciliter l'introduction et l'extraction de ceux-ci.

Pour mieux comprendre l'objet de la présente invention sur le plan annexe on a représenté une réalisation pratique de préférence de celui-ci. Sur ce plan:

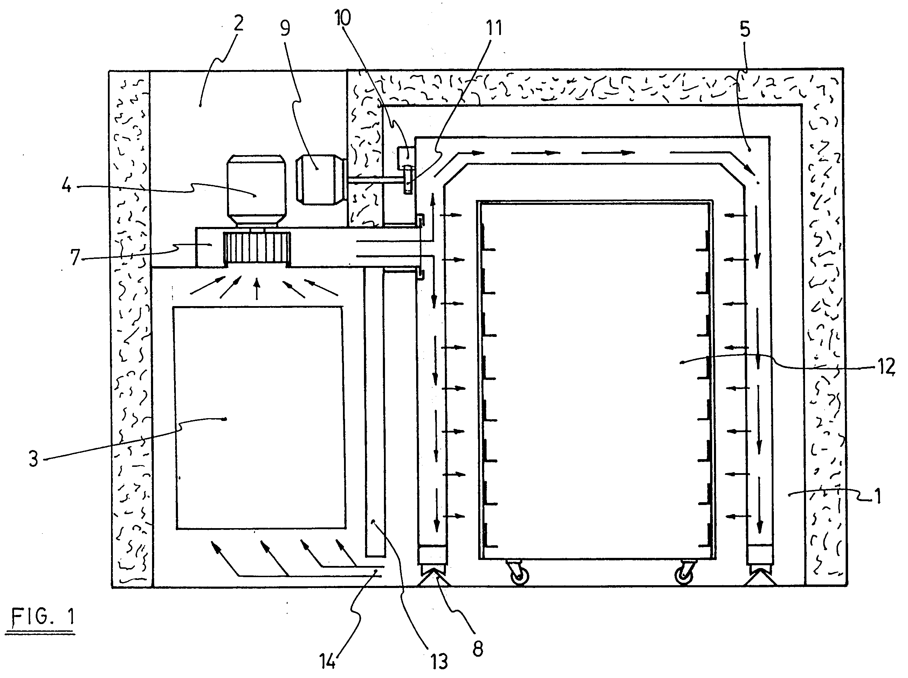

- La figure 1 montre une vue en élévation, sectionnée par un plan vertical, du four perfectionné, objet de l'invention, avec un seul pont.
- La figure 2 montre une vue en plan, sectionnée par un plan horizontal, du four avec deux ponts alignés pour former un tunnel de cuisson.

Comme on peut observer sur les figures de référence, le four de l'invention intègre une chambre chauffée (1), où se réalise la cuisson du produit, le chauffage de celle-ci s'effectuant par l'introduction d'air chaud; ce four intègre de plus un compartiment annexe (2) où sont logés des moyens de chauffage (3) et une turbine (4) chargée de projeter l'air chaud vers l'intérieur de la chambre (1).

A l'intérieur de cette chambre (1), on dispose au moins un pont creux (5) qui définit dans ses flancs intérieurs opposés plusieurs sorties verticales (6), équidistantes, à travers lesquelles émerge le fluide chaud projeté par la turbine (4).

La turbine (4) et le pont (5) sont liés entre eux par un conduit (7) fixe qui s'introduit à l'intérieur de la chambre chauffée (1) et dont l'extrémité s'accouple avec la possibilité de déplacement sur le mur extérieur du pont (5); pour réaliser cet accouplement il est prévu que le conduit (7) achève par la bouche qui s'introduit à l'intérieur du pont (5) dans un cadre périphérique plan, et que la cloison du pont (5) définisse un orifice de dimensions supérieures à la section du conduit (7) et inférieures que la surface définie par ce cadre périphérique disposé dans le conduit (7); de cette manière, le pont (5) restera connecté au conduit (7) indépendamment de la position du parcours qu'il occupe, permettant l'entrée du fluide chaud projeté par la turbine.

Le pont (5) s'appuie avec la possibilité de déplacement sur des guides inférieures (8) avec la possibilité de pouvoir réaliser des mouvements alternatifs dont la course coïncide avec la distance qui sépare deux sorties consécutives (6).

Pour que le pont (5) puisse se déplacer sur les guides (8), on a prévu que celui-ci soit actionné par un élément moteur (9) au moyen d'un mécanisme transmetteur de mouvement, qui, dans cette réalisation est composé par une crémaillère (10) solidaire du pont (5), et sur laquelle agit un pignon moteur (11) actionné par l'élément moteur (9).

Le pont (5) définit des dimensions adéquates pour permettre le logement dans son intérieur d'au moins un chariot porte-plateaux (12) destiné à supporter le produit à cuire à l'intérieur de la chambre chauffée (1).

Dans les zones proches des moyens de chauffage (3), la chambre chauffée (1) et le compartiment annexe (2) se trouvent séparés par une chambre humidificatrice (13), au dessous de laquelle se trouve un orifice (14) qui permet le passage du fluide chaud de la chambre chauffée (1) au compartiment annexe (2), de manière que le fluide chaud contenu dans la chambre chauffée (1) est absorbé par la turbine (4), en passant par l'orifice (14) et les moyens de chauffage (3), pour être projeté de nouveau par l'intérieur du conduit (7) vers le pont (5) en émergeant à travers les orifices (6) définis dans le pont (5); de cette manière, il se forme une circulation continue de fluide obtenant ainsi un rendement élevé du four.

Il est prévu que la chambre chauffée (1) présente deux entrées opposées (15) et (16) qui peuvent se trouver ouvertes à l'extérieur, fermées par des plaques transparentes fixes (17) ou abattables (18).

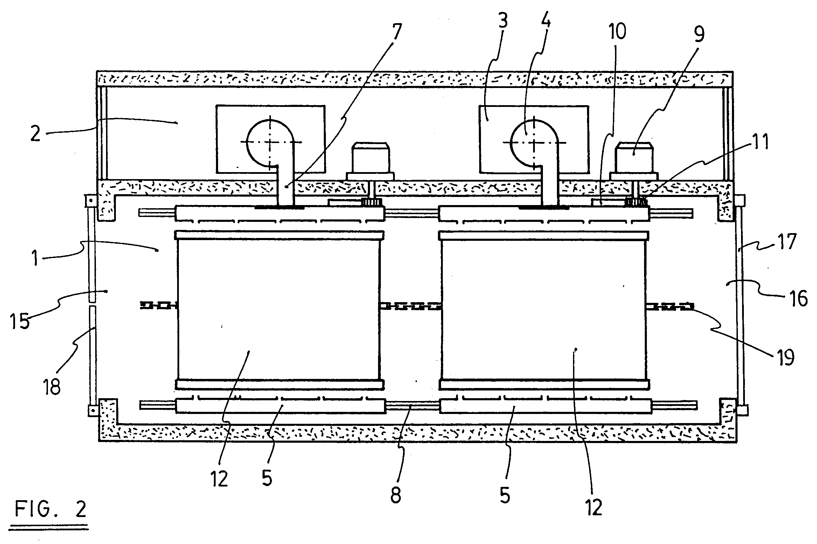

Etant donné la disposition des éléments qui composent le four et que les ponts (5) son déplaçables pour permettre que l'air chaud qui émerge à travers les sorties (6) réalise des balayages sur le produit en couvrant tous ceux-ci la surface totale du produit, ce four permet que la chambre chauffée (1) définisse une longueur aussi longue que voulu, avec la possibilité d'incorporer plusieurs ponts alignés, tel que représenté sur la figure 2, pour réaliser la cuisson simultanée du produit contenu dans plusieurs chariots porte-plateaux (12), car une fois ceux-ci introduits à l'intérieur du four, ils demeurent statiques, les ponts creux (5) se déplaçant simultanément.

Afin de réaliser l'introduction et l'extraction des chariots porte-plateaux (12) à l'intérieur du tunnel de cuisson il est prévu que le four comprenne des moyens d'entraînement formés de préférence par une chaîne (19) avec des moyens de fixation du chariot.

En cas de formation d'un tunnel de cuisson, chacun des ponts (5) comprendra les moyens de cuissons (3) correspondants, les turbines (4) et les moyens de déplacement.

Une fois suffisamment décrite la nature de l'invention, ainsi qu'une réalisation pratique de celle-ci, on fait constater que l'on peut introduire les changements considérés adéquats à condition de ne pas varier les caractéristiques essentielles qui sont revendiquées ci-après.

## Revendications

1. Four perfectionné du type de ceux employés pour cuire des produits, de préférence alimentaires et qui incorporent des moyens de chauffage et une turbine qui projette l'air chaud vers l'intérieur du four; se caractérisant en ce que à l'intérieur du four un pont creux est au moins disposé, monté avec la possibilité de déplacement sur des guides parallèles et qui présente extérieurement une entrée d'air chaud projeté par la turbine et dans les flancs internes opposés un nombre réduit de sorties d'air chaud, équidistantes et parallèles, formées par des rainures verticales; le four incorporant des moyens de déplacement du pont, qui l'obligent à réaliser des mouvements alternatifs sur les guides.

2. Four, selon la revendication précédente, se caractérisant en ce que le pont présente des dimensions extérieures légèrement inférieures à celles de la chambre chauffée du four.

3. Four, selon les revendications précédentes, se caractérisant en ce que le pont présente des dimensions qui permettent le positionnement dans son intérieur d'au moins un chariot porte-plateaux.

4. Four, selon les revendications précédentes, se caractérisant en ce que l'entrée d'air chaud au pont est composée par un orifice où est introduit l'extrémité d'un conduit de circulation d'air chaud, permettant l'accouplement du déplacement relatif entre le conduit et le pont.

5. Four, selon les revendications précédentes, se caractérisant en ce que les moyens de déplacement du pont sont composés de préférence par une crémaillère fixée sur celui-ci, sur laquelle s'accouple un pignon actionné par un élément moteur.

6. Four, selon les revendications précédentes, se caractérisant en que les déplacements alternatifs décrits par le pont sont d'une largeur égale à la distance existant entre deux des sorties consécutives d'air chaud.

7. Four, selon les revendications précédentes, se caractérisant en ce que les deux flancs opposés du four, perpendiculaires au déplacement du pont, définissent deux entrées à celui-ci.

8. Four, selon les revendications précédentes, se caractérisant en que sur l'une des entrées est montée de manière amovible une plaque transparente et sur l'autre, une plaque transparente abattable.

9. Four, selon les revendications 1 et 8 se caractérisant en ce que les deux entrées du four se trouvent ouvertes à l'extérieur et dans son intérieur sont disposés alignés plusieurs ponts avec les turbines et les moyens de chauffage correspondants, formant un tunnel de cuisson.

10. Four, selon les revendications 1, 8 et 9 se caractérisant en qu'il comprend des moyens d'entraînement de chariots porte-plateaux à l'intérieur des ponts alignés à l'intérieur du four.

11. Four, selon les revendications 1, 8, 9 et 10 se caractérisant en ce que les moyens d'entraînement des chariots sont composés de préférence par une chaîne activée par un moteur et qui présente des moyens de poussée des chariots porte-plateaux.

12. Four, selon l'une quelconque des revendications précédentes se caractérisant en qu'une portion de la cloison latérale du four, annexe aux moyens de chauffage, est formée d'une chambre humidificatrice avec des sorties de vapeur orientées vers l'intérieur du four.

13. Four, selon l'une quelconque des revendications précédentes se caractérisant en ce que la chambre chauffée présente sous la chambre humidificatrice un orifice de sortie de l'air chaud, qui est absorbé par la turbine vers les moyens de chauffage, pour le projeter de nouveau vers le pont correspondant.
